# EUROPÄISCHE PATENTSCHRIFT

(11) **EP 2 000 695 B1**
(45) Veröffentlichungstag und Bekanntmachung des Hinweises auf die Patenterteilung: **26.10.2011**
(21) Anmeldenummer: 08005603.9
(22) Anmeldetag: 26.03.2008
(51) Int. Cl.: F16F 1/38

(54) **Zusammensteckbares Lager**
Insertable bearing
Support enfichable

(30) Priorität: 04.06.2007 DE 102007026199
(43) Veröffentlichungstag der Anmeldung: 10.12.2008
(73) Patentinhaber: Carl Freudenberg KG, 69469 Weinheim (DE)
(72) Erfinder: Winkler, Gerold, verstorben (DE); Winkler, Marion, 69488, Birkenau (DE); Winkler, Stephan, 69488, Birkenau (DE)

(56) Entgegenhaltungen:
- EP-A1- 0 381 566
- EP-A1- 0 641 955
- EP-A1- 0 896 168
- EP-B1- 1 628 040
- DE-A1- 10 354 727
- DE-A1-102004 018 241
- DE-A1-102004 045 669
- DE-B- 1 011 827
- DE-T2- 69 504 469
- DE-U1- 29 605 393
- JP-A- 7 269 938
- US-A- 4 884 656

## Beschreibung

### Technisches Gebiet

Die Erfindung betrifft ein Lager gemäß dem Oberbegriff des Patentanspruchs 1.

### Stand der Technik

Die US 4,884,656 A offenbart eine Platte mit einem Loch, in welches ein Element mit radial inwärts flexiblen Wandteilen eingefügt ist. Die EP 0 381 566 A1 zeigt ein Lager mit zwei Halbschalen. Aus der DE 296 05 393 U1 ist eine Vorrichtung mit einer Hülse bekannt, die einen Erdbereich mit veränderlichem Durchmesser aufweist.

Derartige Lager sind aus dem Stand der Technik bereits bekannt und finden als Aggregatelager, Getriebelager oder Motorlager in Kraftfahrzeugen Verwendung. Die gattungsbildenden Lager weisen Gehäuse auf, welche an einem ersten Maschinenelement festgelegt werden können, und Kerne, welche an einem zweiten Maschinenelement festgelegt werden können. Die beiden Maschinenelemente werden zur Dämpfung von Schwingungen gegeneinander gelagert. Bei den gattungsbildenden Lagern ist nachteilig, dass eine exakte Positionierung des Kerns innerhalb des Gehäuses aufwändig ist.

In Kraftfahrzeugmodellreihen mit unterschiedlichen Motoren und Getrieben müssen die Lager auf die Karosserie abgestimmt werden. Hierbei ist wünschenswert, dass ein Lager baukastenähnlich aufeinander abstimmbare hydraulisch dämpfende und elastomerdämpfende Anteile zeigt. Außerdem wird in Kraftfahrzeugen immer wichtiger, das Gewicht aller Bauteile zu minimieren. Insoweit muss auch die Lagergröße minimiert werden.

Aus dem Stand der Technik ist es bekannt, Gehäuse und Kern an definierten Schnittstellen durch Umformen einzelner Teile miteinander zu verbinden. Derartige Lager sind in der DE 103 51 229 B4 beschrieben. Für den Aufbau dieser Lager müssen schwere Metallteile verwendet werden.

Aus der EP 1 628 040 A1 ist ein Lager bekannt, dessen Einzelteile aus Kunststoff gefertigt sind. Die Stabilität des Lagers wird durch einen Clipsvorgang der Einzelteile und anschließendes Umformen eines metallischen Gehäuses erzielt. Diese Lösung ist bei Hülsengummifedem - mit und ohne hydraulische Dämpfung - praktisch nicht anwendbar.

Die bekannten Lager weisen daher in Bezug auf ihre Fertigung erhebliche Nachteile auf. Es müssen Metallteile umgeformt werden, was insbesondere bei Aluminium-Druckguss-Teilen Haltbarkeitsprobleme erzeugen kann. Eine Fertigung, der aus dem Stand der Technik bekannten Gehäuse aus leichten Kunststoffmaterialien ist nicht möglich, da diese Gehäuse bei den bekannten Fertigungsverfahren platzen würden und sich nicht in einfacher Weise umformen lassen.

### Darstellung der Erfindung

Der Erfindung liegt daher die Aufgabe zugrunde, ein Lager der eingangs genannten Art derart auszugestalten und weiterzubilden, dass eine problemlose und kostengünstige Fertigung bei hoher Betriebstauglichkeit gegeben ist.

Die vorliegende Erfindung löst die zuvor genannte Aufgabe durch die Merkmale des Patentanspruchs 1.

Erfindungsgemäß ist erkannt worden, dass durch die erfindungsgemäße Ausgestaltung der Mittel das Gehäuse und der Kern problemlos zusammenfügbar sind. Auf aufwändige Vorrichtungen, welche eine definierte Positionierung des Gehäuses und des Kerns zueinander sicherstellen und beim Umformen große Kräfte übertragen müssen, kann verzichtet werden. Der Montageprozess ist wenig zeitaufwändig, da Gehäuse und Kern mit zueinander komplementär ausgebildeten Elementen versehen sind, welche deren relative Positionierung zueinander im Augenblick des Zusammenfügens sicherstellen. Insoweit kann auf aufwändige und kostspielige Verfahrensschritte verzichtet werden, ohne dass eine korrekte Positionierung des Kerns im Gehäuse in Frage steht. Außerdem wird auf teuere Umformwerkzeuge und zusätzliche Metallteile, die enge und teure Presspassungen erfordern, verzichtet.

Erfindungsgemäß ist weiter erkannt worden, dass das Gehäuse aus einem Kunststoff gefertigt sein kann, da die vertikalen Hauptbelastungen nicht über die Clips- oder Fügestellen geleitet werden.

Des Weiteren ist erkannt worden, dass der Kern in einem sich im Wesentlichen radial erstreckenden Elastomer eingebettet und so in das Gehäuse eingebracht werden kann, dass die Hauptbelastung auf das Gehäuse in radialer Richtung geleitet wird. Dabei werden erheblich niedrigere Lasten in andere Richtungen, insbesondere in axialer Richtung, geleitet.

Das Gehäuse und der Kern sind reversibel zusammenfügbar. Diese konkrete Ausgestaltung erlaubt das Entfernten eines schadhaft gewordenen Kerns oder eines schadhaft gewordenen Gehäuses. Denkbar ist auch, dass weitere Elemente im Inneren des Gehäuses entfernt werden können, sofern diese nicht mehr betriebstaugtich sind. Insoweit ist durch diese Ausgestaltung eine Wiederverwertbarkeit einzelner Teile des Lagers realisierbar.

Vor diesem Hintergrund ist dem Kern ein Elastomermantel zugeordnet. Der Elastomermantel könnte an den Kern anvulkanisiert sein und diesen vollumfänglich umgeben. Diese Ausgestaltung stellt sicher, dass der Kern elastisch relativ zum Gehäuse beweglich ist. Durch geeignete Wahl der Geometrie und des Elastomermaterials kann die Steifigkeit des Lagers eingestellt werden. Insbesondere ist denkbar, den Elastomermantel aus Gummi zu fertigen. Hierdurch kann die Kombination aus Kern, Elastomermantel und Gehäuse als Hülsengummifeder ausgestaltet werden.

Der Elastomermantel weist Überstände auf. Unter Überständen sind Vorsprünge und Ausstülpungen zu verstehen, welche dem Elastomermantel einen Umfang verleihen, der größer ist als der Innenumfang des Gehäuses. Die Überstände erlauben eine Festlegung des Elastomermantels innerhalb des Gehäuses, indem nämlich der Elastomermantel bereichsweise deformiert und eingepresst wird.

Die Überstände fungieren als Dichtelemente. Vor diesem Hintergrund ist denkbar, dass die Dichtelemente als Dichtringe oder Dichtwulste ausgebildet sind, die als halbkreisförmige Ausstülpungen am Elastomermantel angeordnet sind. Die Dichtelemente bewirken, dass in das Innere des Gehäuses keinerlei Luft oder Verschmutzungen eindringen können und kein Fluid verloren geht.

Die Überstände fungieren als Widerlager für das Gehäuse. Diese Ausgestaltung stellt sicher, dass der Kern innerhalb des Gehäuses in axialer Richtung festlegbar ist Dies wird dadurch realisiert, dass die Rastnasen am Rastwiderlager festliegen, wobei ein Elastomerüberstand gegen das Ende des Gehäuses gepresst wird, das den Rastwiderlagern abgewandt ist. Hierdurch ist sichergestellt, dass der Kern durch einen Presssitz innerhalb des Gehäuses positioniert ist.

Der Elastomermantel weist Ausnehmungen auf, die zusammen mit der Innenfläche des Gehäuses mindestens zwei Hohlräume begrenzen. Diese konkrete Ausgestaltung erlaubt die Aufnahme eines Fluids innerhalb des Gehäuses und ermöglicht die Einstellung insbesondere hydraulischer Federungseigenschaften des Lagers. Beispielsweise ist denkbar, dass durch Vorkehrung von Hohlräumen unterschiedlicher Geometrien in unterschiedlichen Raumrichtungen unterschiedliche Dämpfungen, insbesondere hydraulische Dämpfungen, realisierbar sind.

Folglich ist die eingangs genannte Aufgabe gelöst.

Die Elemente könnten elastisch bewegliche Rastnasen und Rastwiderlager umfassen. Diese konkrete Ausgestaltung erlaubt ein Zusammenstecken des Kerns und des Gehäuses. Eine solche Fertigung kann besonders schnell erfolgen. Dabei ist denkbar, dass die Rastnasen aus Metall oder Kunststoff gefertigt sind. Metalle erlauben die Realisierung besonders stabiler Rastnasen, Kunststoffe ermöglichen eine kostengünstige Fertigung bei niedrigem Gewicht. Vor diesem Hintergrund ist auch denkbar, dass das Gehäuse und der Kern aus Metall oder Kunststoff gefertigt sind. Die Rastnasen könnten in einem Elastomer, insbesondere einem Gummi, eingebettet sein. Hierdurch ist deren Beweglichkeit sichergestellt

Die Rastnasen könnten dem Kern und die Rastwiderlager dem Gehäuse zugeordnet sein. Diese Ausgestaltung erlaubt ein Einfügen des Kerns zusammen mit den Rastnasen in einen Hohlraum des Gehäuses, wobei die Rastnasen geringfügig deformiert werden. Sobald die Rastnasen den Hohlraum verlassen, springen diese in ihre unbelastete Position zurück und können ein Rastwiderlager hintergreifen und an diesem zur Anlage kommen. Hierdurch ist sichergestellt, dass der Kern entgegen der Einschubrichtung nicht mehr aus dem Gehäuse herausgezogen werden kann.

Die Rastwiderlager könnten als Ausnehmungen ausgestaltet sein. Vor diesem Hintergrund ist denkbar, dass die Ausnehmungen von Zähnen beidseitig begrenzt sind. Diese konkrete Ausgestaltung stellt sicher, dass ein Kern innerhalb des Gehäuses nicht verdrehbar ist, da die Rastnasen an den Zähnen zur Anlage kommen, welche die Ausnehmungen begrenzen. Die Ausnehmungen und die Zähne könnten palisadenartig ausgestaltet sein, um eine Vielzahl von Anlagestellen für die Rastnasen zu schaffen.

Der Kern könnte in das Gehäuse einschiebbar sein. Diese Ausgestaltung erlaubt die Vorfertigung eines starren Gehäuses, welches nur noch um einen Kern ergänzt werden muss. Ein Verschließen des Gehäuses durch weitere Mittel ist insoweit nicht notwendig, da der Kern als solcher als Verschlusselement fungiert. Bei dieser Fertigung kann ein Gehäuse aus Kunststoff verwendet werden.

Vorteilhaft können bei dem hier beschriebenen Lager Elastomere und Anschläge bei der Montage vorgespannt werden, um Bauraum und Gewicht zu sparen. Dies ist insbesondere bei weichen Elastomeren notwendig, die großvolumig ausgeführt werden müssen.

Die zweiten Elemente könnten am Elastomermantel angeordnet sein. Vor diesem Hintergrund ist denkbar, dass in den Elastomermantel ein Kanalring, insbesondere aus Kunststoff, eingebettet ist, weichem Rastnasen zugeordnet sind. Diese konkrete Ausgestaltung stellt sicher, dass die dem Kern zugeordneten Elemente besonders fest mit dem Kern verbunden sind. Beispielsweise ist denkbar, dass der Elastomermantel an die zweiten Elemente anvulkanisiert ist.

Der Elastomermantel könnte Pufferabschnitte und Federabschnitte aufweisen. Diese konkrete Ausgestaltung erlaubt es, den oder die Pufferabschnitte gegen den oder die Federabschnitte im Gehäuse zu verspannen. Das Verspannen erfolgt dadurch, dass beim Einschieben des Elastomermantels in das Gehäuse die Pufferabschnitte und Federabschnitte derart gestaucht werden, dass das Lager vorgespannt wird. Hierdurch kann insbesondere die Bauhöhe des Lagers reduziert werden. Die Pufferabschnitte und/oder Federabschnitte könnten durch eine Aussparung herausragen. Die Aussparung könnte in einer äußeren Metall- oder Kunststoffhülse ausgebildet sein, welche mit dem Elastomermantel verbunden ist.

Die Hohlräume könnten mit einem Fluid befüllt sein. Als Fluid könnte eine Hydraulikflüssigkeit fungieren, so dass das Lager als Hydrolager fungieren kann.

Dem Gehäuse könnte ein Flansch mit Durchgängen zugeordnet sein. Der Flansch erlaubt die Festlegung des Lagers an einem ersten Maschinenelement.

Dem Kern könnten Stege mit Durchgängen zugeordnet sein, die aus dem Gehäuse abragen. Die Stege erlauben die Festlegung des Kerns an einem zweiten Maschinenelement, welches gegen ein erstes Maschinenelement gelagert werden soll.

Der Kern und das Gehäuse könnten In einem Fluidbad zusammengefügt werden. Hierdurch ist realisierbar, dass mindestens zwei in einem Elastomermantel vorgesehene Hohlräume völlig mit Fluid befüllt sind. Diese Hohlräume sind mit einem Durchgang zwischen Elastomermantel und Gehäuse miteinander verbunden und können dadurch eine besondere Dämpfungseigenschaft des Lagers entfalten.

Des Weiteren ist denkbar, das Gehäuse und den Kern außerhalb eines Fluidbads zusammenzufügen. Hierbei könnte eine Lanze durch eine geringfügige Ausnehmung im Elastomermantel eingeführt werden, die ein Fluid in das Innere des Gehäuses einbringt. Die Lanze könnte dann nahezu zeitgleich aus dem Elastomermaterial herausgezogen werden, wenn dieses beim Zusammenfügen des Kerns und des Gehäuses komprimiert wird. Hierdurch ist sichergestellt, dass die Ausnehmung, in der sich die Lanze während des Einfüllens des Fluids befindet, durch Komprimierung des Elastomers verschlossen wird. Dieses Herstellungsverfahren stellt sicher, dass die zusammengefügten Teile nahezu keiner Verschmutzung unterliegen. Ein nachträgliches Waschen des Lagers ist insoweit nicht erforderlich.

Es gibt nun verschiedene Möglichkeiten, die Lehre vorliegenden Erfindung auf vorteilhafte Weise auszugestalten. Dazu ist einerseits auf die nachgeordneten Ansprüche, andererseits auf die nachfolgende Erläuterung bevorzugter Ausführungsbeispiele der Erfindung anhand der Zeichnung zu verweisen.

In Verbindung mit der Erläuterung der bevorzugten Ausführungsbeispiele anhand der Zeichnung werden auch im Allgemeinen bevorzugte Ausgestaltungen und Weiterbildungen der Lehre erläutert.

### Kurzbeschreibung der Zeichnung

In der Zeichnung zeigern
- Fig. 1: ein hydraulisches Lager mit einem Gehäuse und einem Kern,
- Fig. 2: einen Kern mit einem Elastomermantel,
- Fig. 3: ein Lager mit einem Elastomermantel aus Gummi, einem Gehäuse und einem Kern, und
- Fig. 4: ein zur radialen Vorspannung geeigneter Kern mit einem Elastomermantel, der einen Pufferabschnitt ausweist.

### Ausführung der Erfindung

Fig: 1 zeigt ein Lager mit einem Gehäuse 4, weiches einen relativ zum Gehäuse 4 beweglichen Kern 2 zumindest teilweise umgibt. Das Lager umfasst Mittel 5, 6, die den Kern 2 im Gehäuse 4 positionieren. Die Mittel 5, 6 umfassen dem Gehäuse 4 zugeordnete erste Elemente 6, die mit dem Kern 2 zugeordneten zweiten Elementen 5 in Eingriff bringbar sind.

Die Elemente 5 sind als Rastnasen ausgebildet und die Elemente 6 als Rastwiderlager. Die Rastnasen 5 sind dem Kern 2 zugeordnet und die Rastwiderlager 6 dem Gehäuse 4.

Die Rastnasen 5 sind in den Elastomermantel 3 des Kerns 2 zumindest teilweise eingebettet und dadurch mit dem Kern 2 fest verbunden. Die Rastwiderlager 6 sind als Ausnehmungen ausgestaltet, die von Zähnen 6a beidseitig begrenzt sind. Die Ausnehmungen und die Zähne 6a sind palisadenartig im Gehäuse 4 ausgebildet. Das Gehäuse 4 ist aus Kunststoff gefertigt. Das Gehäuse 4 und der Kern 2 sind reversibel zusammenfügbar. Der Kern 2 ist in das Gehäuse 4 einschiebbar.

Dem Gehäuse 4 ist ein Flansch 10 mit Durchgängen 11 zugeordnet. Der Flansch 10 dient der Anbindung des Lagers an ein nicht gezeigtes Maschinenelement. Dem Kern 2 sind Stege 13 zugeordnet, welche Durchgänge 14 umfassen. Die Stege 13 überragen das Gehäuse 4 beidseitig. Die Stege 13 dienen der Anbindung des Lagers an ein Maschinenelement.

Am Kern 2 bzw. dessen Stegen 13 oder Durchgängen 14 montierte Maschinenelemente oder andere Bauteile können sich über den Überstand 18 weich am Gehäuse 4 abstützen, wenn die Beweglichkeit des Kerns 2, die ihm durch den Elastomermantel 3 verliehen wird, erschöpft ist.

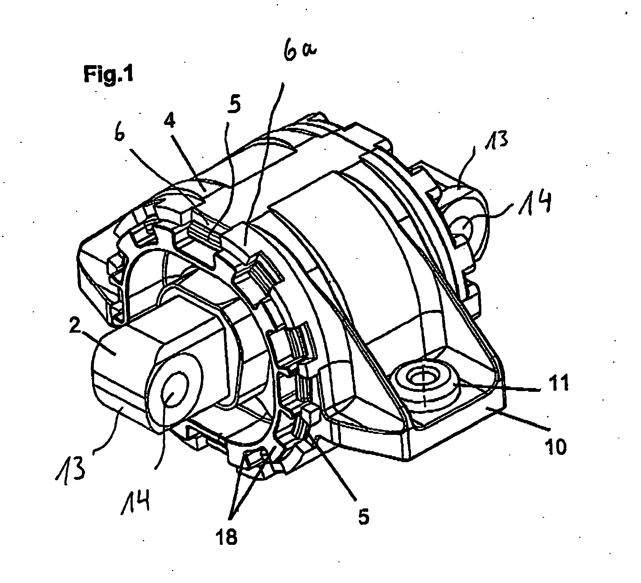

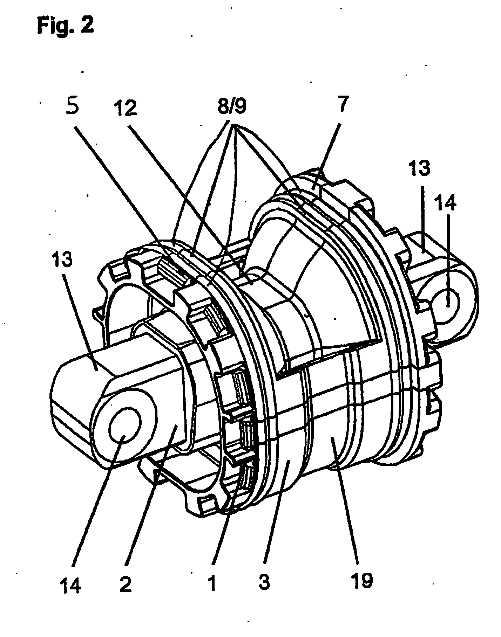

Fig. 2 zeigt den Kern 2 der in das Lager gemäß Fig. 1 eingebracht ist. Dem Kern 2 ist ein Elastomermantel 3 zugeordnet Die zweiten Elemente 5, nämlich die Rastnasen 5, sind am Elastomermantel 3 angeordnet. Sie befinden sich auf einem Kanalring 1, der in den Elastomermantel 3 eingebettet ist

Der Elastomermantel 3 weist Überstände 7, 8, 9 auf. Die Überstände 8, 9 fungieren als Dichtelemente. Die Dichtelemente 8, 9 sind als radial umlaufende Dichtlippen oder Dichtwulste ausgestaltet, die an der Innenwandung des Gehäuses 4 zur Anlage kommen und das Innere des Gehäuses 4 gegen die Atmosphäre abdichten.

Der Überstand 7 fungiert als Widerlager für das Gehäuse 4, wenn der Kern 2 in das Gehäuse 4 gemäß Fig. 1 eingepresst ist

Der Elastomermantel 3 weist Ausnehmungen 12 auf, die zusammen mit der Innenfläche des Gehäuses 4 Hohlräume begrenzen, die ein Hydraulikfluid aufnehmen. Die Hohlräume sind durch einen Kanal 19 miteinander strömungsverbunden.

Dem Kern 2 sind Stege 13 zugeordnet, welche Durchgänge 14 umfassen. Die Stege 13 überragen das Gehäuse 4 gemäß Fig. 1.

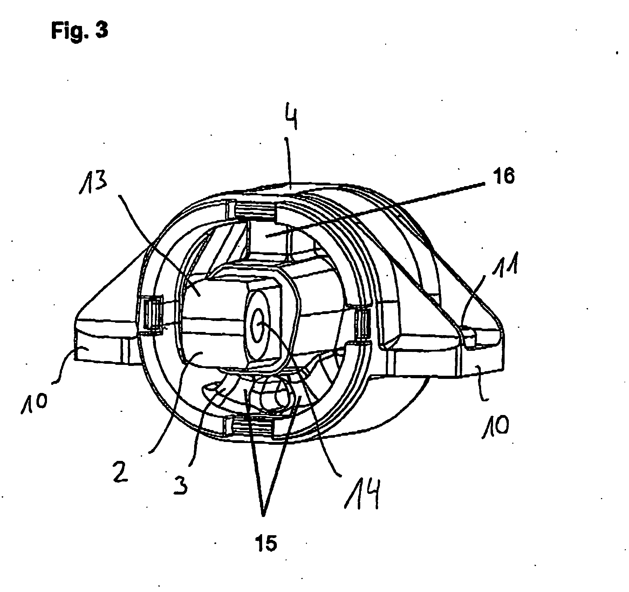

In Fig. 3 ist ein Lager dargestellt, welches einen Kern 2 aufweist, dem ein Elastomermantel 3 zugeordnet ist. Der Elastomermantel 3 weist einen Pufferabschnitt 16 und zwei radial abragende Federabschnitte 15 auf, die am Gehäuse 4 zur Anlage kommen. Der Pufferabschnitt 16 und die zwei Federabschnitte 15 sind gegeneinander verspannt. Dieses Lager ist als Gummilager ohne hydraulische Dämpfungsfunktion ausgestattet.

Dem Gehäuse 4 ist ein Flansch 10 mit Durchgängen 11 zugeordnet. Der Flansch 10 dient der Anbindung des Lagers an ein nicht gezeigtes Maschinenelement. Dem Kern 2 sind Stege 13 zugeordnet, welche Durchgänge 14 umfassen. Die Stege 13 überragen das Gehäuse 4 beidseitig. Die Stege 13 dienen der Anbindung des Lagers an ein Maschinenelement.

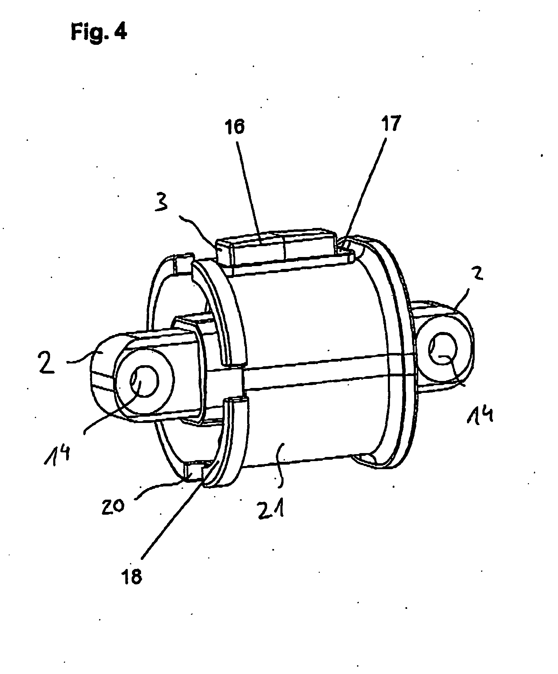

Fig. 4 zeigt einen Kern 2, mit einem Elastomermantel 3 vor der Montage im nicht gezeigten Gehäuse 4 gemäß Fig. 3. Der Pufferabschnitt 16 des Elastomermantels 3 ragt aus einer Aussparung 17 einer Hülse 21 heraus. Die Querschnittsfläche der Aussparung 17 ist erheblich größer als die Querschnittsfläche des herausragenden Pufferabschnitts 16. Der Pufferabschnitt 16 überragt in radialer Richtung einen Überstand 18, der aus Elastomer gefertigt ist. Der Überstand 18 weist Aussparungen 20 auf, die es erlauben, den Überstand 18 segmentweise in radialer Richtung in Richtung des Kerns 2 zu drücken. Dies ist beim Einschieben in das nicht gezeigte Gehäuse 4 gemäß Fig. 3 von Vorteil, um die Montage des Kerns 2 innerhalb des Gehäuses 4 zu ermöglichen. Nach dem Einschieben des Kerns 2 in das Gehäuse 4 federn die Segmente des Überstands 18 in ihre Ausgangsstellung zurück und hintergreifen einen Randabschnitt des Gehäuses 4.

Am Kern 2 bzw. dessen Durchgängen 14 montierte Maschinenelemente oder andere Bauteile können sich über den Überstand 18 weich am Gehäuse 4 abstützen, wenn die Beweglichkeit des Kerns 2, die ihm durch den Elastomermantel 3 verliehen wird, erschöpft ist

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentanspruch verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Lager, umfassend ein Gehäuse (4), welches einen relativ zum Gehäuse (4) beweglichen Kern (2) zumindest teilweise umgibt, und Mittel (5, 6), die den Kern (2) im Gehäuse (4) positionieren, wobei die Mittel (5, 6) dem Gehäuse (4) zugeordnete erste Elemente (6) umfassen, die mit dem Kern (2) zugeordneten zweiten Elementen (5) in Eingriff bringbar sind, wobei das Gehäuse (4) und der Kern (2) reversibel zusammenfügbar sind und wobei dem Kern (2) ein Elastomermantel (3) zugeordnet ist,
**dadurch gekennzeichnet, dass**
der Elastomermantel (3) Überstände (7, 8, 9, 18) aufweist, wobei die Überstände (7, 8, 9) als Dichtelemente und/ oder als Widerlager für das Gehäuse (4) fungieren, wobei der Elastomermantel (3) Ausnehmungen (12) aufweist, die zusammen mit der Innenfläche des Gehäuses (4) mindestens einen Hohlraum begrenzen und wobei die Hohlräume mit einem Fluid befüllt sind, und durch mindestens einen Kanal (19) verbunden sind.

2. Lager nach Anspruch 1, **dadurch gekennzeichnet, dass** die Elemente (5, 6) elastisch bewegliche Rastnasen (5) und Rastwiderlager (6) umfassen.

3. Lager nach Anspruch 2, **dadurch gekennzeichnet, dass** die Rastnasen (5) dem Kern (2) und die Rastwiderlager (6) dem Gehäuse (4) zugeordnet sind.

4. Lager nach Anspruch 2 oder 3, **dadurch gekennzeichnet, dass** die Rastwiderlager (6) als Ausnehmungen ausgestaltet sind.

5. Lager nach einem der Ansprüche 1 bis 4, **dadurch gekennzeichnet, dass** der Kern (2) in das Gehäuse (4) einschiebbar ist.

6. Lager nach einem der Ansprüche 1 bis 5, **dadurch gekennzeichnet, dass** die zweiten Elemente (5) am Elastomermantel (3) angeordnet sind.

7. Lager nach einem der Ansprüche 1 bis 6, **dadurch gekennzeichnet, dass** dem Gehäuse (4) ein Flansch (10) mit Durchgängen (11) zugeordnet ist

8. Lager nach einem der Ansprüche 1 bis 7, **dadurch gekennzeichnet, dass** der Kern (2) Stege (13) mit Durchgängen (14) umfasst, die aus dem Gehäuse (4) abragen.

## Claims

1. Bearing, comprising a housing (4) which at least partially surrounds a core (2) which is movable relative to the housing (4), and means (5, 6) which position the core (2) in the housing (4), wherein the means (5, 6) comprise first elements (6) which are assigned to the housing (4) and can be brought into engagement with second elements (5) assigned to the core (2), wherein the housing (4) and the core (2) can be reversibly fitted together, and wherein the core (2) is assigned an elastomer casing (3), **characterized in that** the elastomer casing (3) has projecting lengths (7, 8, 9, 18), the projecting lengths (7, 8, 9) acting as sealing elements and/or as abutments for the housing (4), the elastomer casing (3) having recesses (12) which, together with the inner surface of the housing (4), bound at least one cavity, and the cavities being filled with a fluid and being connected by at least one channel (19).

2. Bearing according to Claim 1, **characterized in that** the elements (5, 6) comprise elastically movable latching lugs (5) and latching abutments (6).

3. Bearing according to Claim 2, **characterized in that** the latching lugs (5) are assigned to the core (2), and the latching abutments (6) are assigned to the housing (4).

4. Bearing according to Claim 2 or 3, **characterized in that** the latching abutments (6) are configured as recesses.

5. Bearing according to one of Claims 1 to 4, **characterized in that** the core (2) can be pushed into the housing (4).

6. Bearing according to one of Claims 1 to 5, **characterized in that** the second elements (5) are arranged on the elastomer casing (3).

7. Bearing according to one of Claims 1 to 6, **characterized in that** the housing (4) is assigned a flange (10) having passages (11).

8. Bearing according to one of Claims 1 to 7, **characterized in that** the core (2) comprises webs (13) having passages (14), the webs protruding out of the housing (4).

## Revendications

1. Palier comprenant un boîtier (4) qui entoure au moins en partie une âme (2) apte à se déplacer par rapport au boîtier (4) ainsi que des moyens (5, 6) qui positionnent l'âme (2) dans le boîtier (4),
les moyens (5, 6) comprenant des premières éléments (6) associés au boîtier (4) et aptes à engager des deuxièmes éléments (5) associés à l'âme (2),
le boîtier (4) et l'âme (2) pouvant être assemblés de manière réversible,
une enveloppe en élastomère (3) étant associée à l'âme (2),
**caractérisé en ce que**
l'enveloppe en élastomère (3) présente des saillies (7, 8, 9, 18),
**en ce que** les saillies (7, 8, 9) jouent le rôle d'éléments d'étanchéité et/ou de contre-palier pour le boîtier (4),
**en ce que** l'enveloppe (3) en élastomère présente des découpes (12) qui délimitent avec la surface intérieure du boîtier (4) au moins une cavité et
**en ce que** les cavités sont remplies d'un fluide et reliées par au moins un canal (19).

2. Palier selon la revendication 1, **caractérisé en ce que** les éléments (5, 6) comportent des becs élastiques encliquetables mobiles (5) et des contre-paliers d'encliquetage (6).

3. Palier selon la revendication 2, **caractérisé en ce que** les becs d'encliquetage (5) sont associés à l'âme (2) et les contre-paliers d'encliquetage (6) au boîtier (4).

4. Palier selon les revendications 2 ou 3, **caractérisé en ce que** les contre-paliers d'encliquetage (6) sont configurés comme découpes.

5. Palier selon l'une des revendications 1 à 4, **caractérisé en ce que** l'âme (2) peut être insérée dans le boîtier (4).

6. Palier selon l'une des revendications 1 à 5, **caractérisé en ce que** les deuxièmes éléments (5) sont disposés sur l'enveloppe (3) en élastomère.

7. Palier selon l'une des revendications 1 à 6, **caractérisé en ce qu'**une bride (10) dotée de passages (11) est associée au boîtier (4).

8. Palier selon l'une des revendications 1 à 7, **caractérisé en ce que** l'âme (2) comporte des nervures (13) dotées de passages (14) et débordant hors du boîtier (4).
